# EUROPEAN PATENT APPLICATION

(11) **EP 3 296 166 A1**
(43) Date of publication of application: **21.03.2018**
(21) Application number: 17190294.3
(22) Date of filing: 11.09.2017
(51) Int. Cl.: B60S 1/08, B60R 1/02, B60R 11/04, H04N 7/18, G06T 7/00

(54) **VEHICULAR VISUAL RECOGNITION DEVICE**

(30) Priority: 14.09.2016 JP 2016179850
(71) Applicant: Kabushiki Kaisha Tokai-Rika-Denki-Seisakusho, Niwa-gun, Aichi 480-0195 (JP)
(72) Inventor: KATO, Naofumi, Niwa-gun,, Aichi 480-0195 (JP)
(74) Representative: TBK

(57) **Abstract**

There is provided a vehicular visual recognition device including: an imaging section (12) that images vehicle surroundings through a region that a wiper blade (22) passes through; a display section (14) that displays an imaging result of the imaging section; a detection section (16) that detects a position of the wiper blade; and a controller (18) that performs display control to display an image of vehicle surroundings captured by the imaging section and, at a timing at which the wiper blade passes through the imaging section, to hold an imaging result of prior to the wiper blade passing the imaging section for display on the display section.

## Description

### BACKGROUND

### Technical Field

The present disclosure relates to a vehicular visual recognition device that images vehicle surroundings and displays a captured image for visual recognition of the vehicle surroundings.

### Related Art

Vehicular visual recognition devices are known in which an imaging section such as a camera and a display section such as a monitor are installed to a vehicle, and a captured image of vehicle surroundings captured by the imaging section is displayed on the display section.

Japanese Patent Application Laid-Open (JP-A) No. 2006-224873 proposes a vehicle surroundings monitoring device that is provided with cameras at left-right positions of a vehicle and at the vehicle rear, and that displays the captured image of each camera on a display section.

However, an imaging section provided inside a vehicle cabin is preferable from the viewpoint of not needing to consider waterproofing and the like.

In cases in which an imaging section is provided inside the vehicle cabin, a captured image in which the influence of rain and the like has been reduced can be displayed by providing the imaging section in a wiping range of a wiper blade.

However, if the imaging section is provided in the wiping range of a wiper blade, then the captured image is discontinuous due to the imaging section being blocked by the wiper blade, and checking the vehicle surroundings may be difficult.

### SUMMARY

The present disclosure is arrived at in consideration of the above circumstances, and the present disclosure provides a vehicular visual recognition device capable of improving visibility of vehicle surroundings in a configuration in which the vehicle surroundings are imaged through a region that a wiper blade passes through, and then displayed.

A first aspect of the present disclosure includes an imaging section that images vehicle surroundings through a region that a wiper blade passes through, a display section that displays an imaging result of the imaging section, a detection section that detects a position of the wiper blade, and a controller that performs display control to display an image of vehicle surroundings captured by the imaging section and, at a timing at which the wiper blade passes through the imaging section, an imaging result of prior to the wiper blade passing the imaging section is held for display on the display section.

According to the first aspect of the present disclosure, in the imaging section, the vehicle surroundings are imaged through a region the wiper blade passes through. Imaging through a region that the wiper blade passes through enables a captured image to be obtained in which the influence of rain is reduced even during rainfall since rain is wiped away by the wiper blade.

The imaging result of the imaging section is displayed in the display section and the position of the wiper blade is detected in the detection section.

Then, in the controller, display control is performed to display the image of vehicle surroundings captured by the imaging section and, at a timing at which the wiper blade passes the imaging section, to hold the imaging result of prior to the wiper blade passing the imaging section for display on the display section. This enables the visibility of the vehicle surroundings to be improved without the image being interrupted even when the wiper blade blocks in front of the imaging section, since the image from prior to the wiper blade blocking in front of the imaging section is held on the display section.

Note that in a second aspect of the present disclosure, an instruction section for instructing wiping operation of the wiper blade may be further included, and the controller may perform the display control in response to the wiping operation being instructed by the instruction section.

Further, in a third aspect of the present disclosure, the controller may further control the display section so that information indicating that the wiping operation is ongoing is displayed while wiping operation is being performed by the wiper blade. This enables forgetting to stop the operation of the wiper blade to be prevented.

Further, in a fourth aspect of the present disclosure, a mode may be adopted in which the imaging section images rearwards of a vehicle as vehicle surroundings, and the display section is disposed in a position of an interior rearview mirror and includes a half mirror at a display face side of the display section. This enables visual recognition of rearward of the vehicle using the half mirror even when the display section fails.

According to the present disclosure described above, in a configuration in which the vehicle surroundings are imaged through a region that the wiper blade passes through and displayed, there is an advantageous effect of enabling a vehicular visual recognition device capable of improving visibility of the vehicle surroundings to be provided.

### BRIEF DESCRIPTION OF THE DRAWINGS

Exemplary embodiments of the present disclosure will be described in detail based on the following figures, wherein:
Fig. 1 is a block diagram illustrating a schematic configuration of a vehicular visual recognition device according to an exemplary embodiment;
Fig. 2 is a diagram schematically illustrating vehicle installation positions of a vehicular visual recognition device according to an exemplary embodiment;
Fig. 3 is a diagram illustrating a positional relationship between a wiping range of a wiper blade and a camera;
Fig. 4 is a timing chart illustrating an example of an ON/OFF signal of a wiper switch, a wiper position signal, timings at which a camera field of view is blocked by a wiper blade, and timings at which images are held;
Fig. 5 is a diagram illustrating an example of "REAR WIPER ON" displayed on a monitor; and
Fig. 6 is a flowchart illustrating an example of a flow of processing performed by a control device of a vehicular visual recognition device according to the present exemplary embodiment.

### DETAILED DESCRIPTION

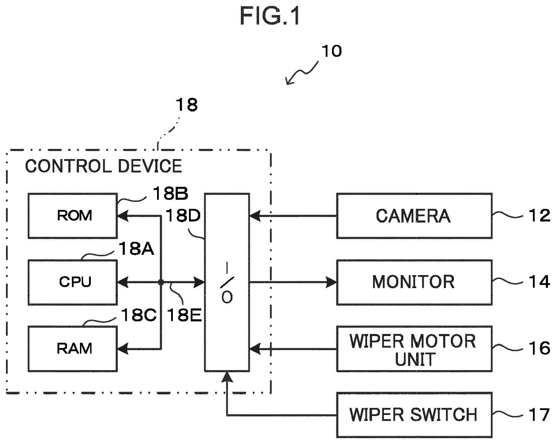

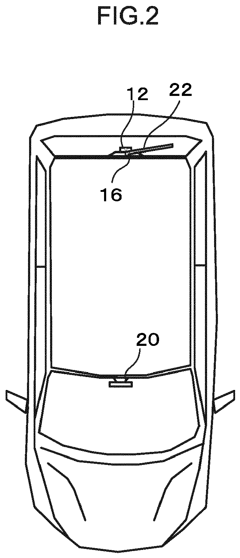

An example of an exemplary embodiment of the present disclosure is described in detail below, with reference to the drawings. Fig. 1 is a block diagram illustrating a schematic configuration of a vehicular visual recognition device according to the present exemplary embodiment. Fig. 2 is a diagram schematically illustrating vehicle installation positions of the vehicular visual recognition device according to the present exemplary embodiment.

The vehicular visual recognition device 10 according to the present exemplary embodiment includes a camera 12 serving as an example of an imaging section, a monitor 14 serving as an example of a display section, a wiper motor unit 16 serving as an example of a detection section, a wiper switch 17 serving as an example of an instruction section, and a control device 18 serving as an example of a controller.

The camera 12 images rearward of the vehicle and outputs an imaging result to the control device 18. The camera 12 is disposed on a rear window glass upper portion at the vehicle rear in a vehicle cabin. The camera 12 is provided in a region that a wiper blade (wiper arm) 22 for wiping the rear window glass passes through (a wiping range). This enables a captured image to be obtained in which the influence of rain is reduced even during rainfall since rain is wiped away by the wiper blade 22.

The monitor 14 is provided inside an interior rearview mirror 20 and is connected to the control device 18. A rear-visual-recognition image is generated using the imaging result of the camera 12 and the generated rear-visual-recognition image is displayed on the monitor 14 under control by the control device 18. Note that a half mirror may be provided to a display face side of the monitor 14 of the interior rearview mirror 20 so as to enable a rear field of view to be checked using an optically reflected image from the half mirror when the monitor 14 is in a non-display state.

The wiper motor unit 16 is provided above the rear window glass and the rear window glass is wiped by driving the wiper blade 22. Further, the wiper motor unit 16 is driven by instructions from the wiper switch 17. Further, the wiper motor unit 16 is provided with functionality to detect the position of the wiper blade 22, and the wiper motor unit 16 outputs the result of detecting the position of the wiper blade 22 to the control device 18. Note that the wiper switch 17 is configured capable of instructing any of plural wiping speeds for the wiper blade 22. For example, the wiper switch 17 is configured capable of instructing plural wiping speeds such as high speed, intermediate speed, low speed, and intermittent.

The control device 18 is configured by a microcomputer in which a CPU 18A, ROM 18B, RAM 18C, and an input/output interface (I/O) 18D are connected together by a bus 18E.

The ROM 18B stores various programs such as a vehicular visual recognition control program for performing display control to display the rear-visual-recognition image on the monitor 14. Programs stored in the ROM 18B are expanded into the RAM 18C and executed by the CPU 18A so as to perform display control on the monitor 14.

The camera 12, the monitor 14, the wiper motor unit 16, and the wiper switch 17 are each connected to the I/O 18D. The control device 18 acquires an imaging result of the camera 12, generates a rear-visual-recognition image for display on the monitor 14, and displays the generated rear-visual-recognition image on the monitor 14.

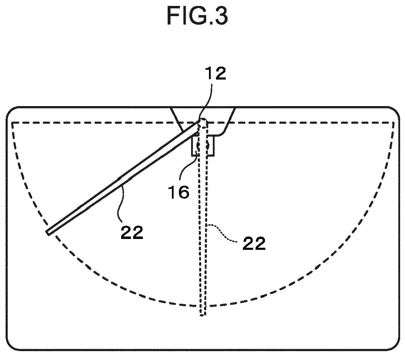

Note that in the present exemplary embodiment, as illustrated in Fig. 3, the camera 12 is provided inside the vehicle cabin and is provided in a region that the wiper blade 22 passes through (the wiping range), and the wiper blade 22 therefore blocks in front of the camera 12 as indicated by the dotted line in Fig. 3. When the wiper blade 22 blocks in front of the camera 12, the wiper blade 22 alone may be displayed on the monitor 14 and the rear side may not be visible.

Thus, in the present exemplary embodiment, at the timing at which the wiper blade 22 blocks the camera 12, a rear-visual-recognition image from prior to being blocked by the wiper blade 22 is held, thereby preventing the rear-visual-recognition image from being interrupted.

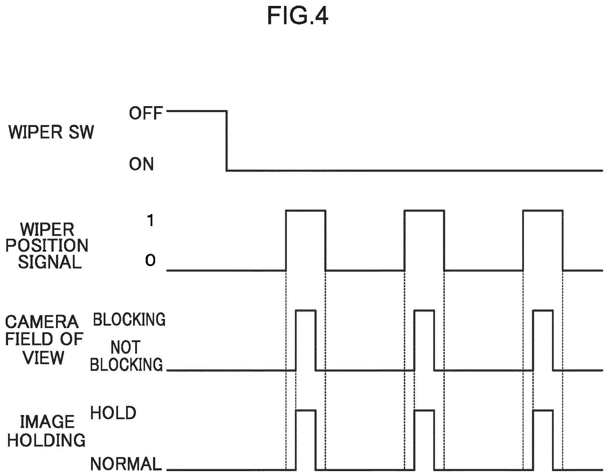

More specifically, when the start of a wiping operation of the wiper blade 22 is instructed by the wiper switch 17, the wiper motor unit 16 detects the position of the wiper blade 22, and the control device 18 acquires a detection result. Then, in cases in which the detected position of the wiper blade 22 is in front of the camera 12 or is a position immediately prior to moving in front of the camera 12 (for example, when a wiper position signal is "1" in Fig. 4), the control device 18 controls the display of the rear-visual-recognition image on the monitor 14 such that the captured image from prior to when that position was detected is held. This enables the rear-visual-recognition image displayed on the monitor 14 to be prevented from being blocked by the wiper blade 22 being in front of the camera 12, and enables the rear side to be checked.

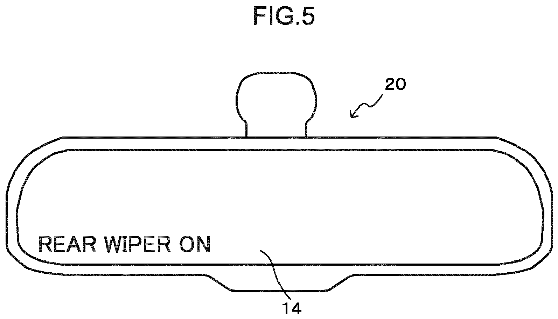

Note that during wiping operation of the wiper blade 22, as illustrated in Fig. 5, a display to prompt an occupant not to forget to instruct stopping of the wiper operation may be performed by displaying the wiper operation state by, for example, displaying "REAR WIPER ON" on the monitor 14.

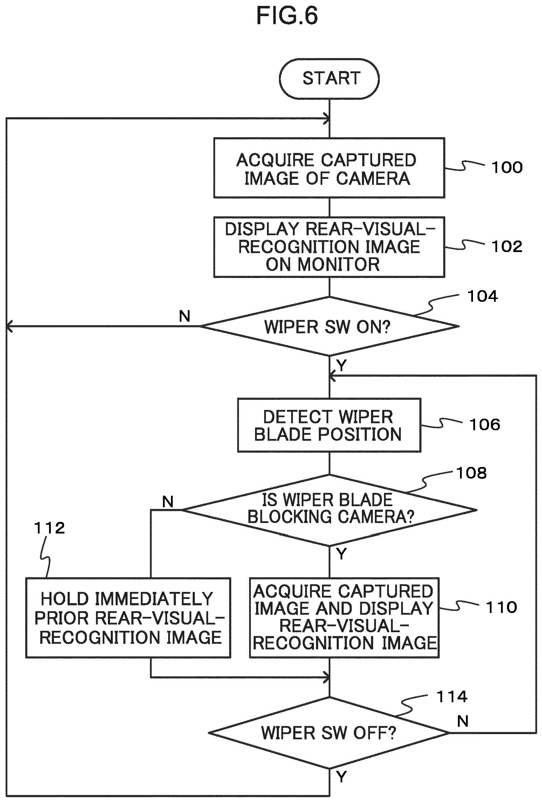

Explanation follows regarding specific processing performed by the control device 18 of the vehicular visual recognition device 10 according to the present exemplary embodiment configured as described above. Fig. 6 is a flowchart illustrating an example of a flow of processing performed by the control device 18 of the vehicular visual recognition device 10 according to the present exemplary embodiment. Note that, for example, the processing in Fig. 6 starts when an ignition switch, not illustrated in the drawings, has been switched ON.

At step 100, the CPU 18A acquires the captured image of the camera 12 and transitions to step 102.

At step 102, the CPU 18A generates a rear-visual-recognition image from the captured image and displays the generated rear-visual-recognition image on the monitor 14. Note that the captured image may be displayed as-is on the monitor 14 as the rear-visual-recognition image, or the rear-visual-recognition image may be generated and displayed on the monitor 14 by performing various corrections such as a brightness correction and a white balance correction.

At step 104, the CPU 18A determines whether or not the wiper switch (SW) 17 has been switched ON, and processing transitions to step 106 in cases in which the determination was affirmative, or processing returns to step 100 and the above processing is repeated in cases in which the determination was negative.

At step 106, the CPU 18A detects the position of the wiper blade 22 and transitions to step 108. The position of the wiper blade 22 is detected by the CPU 18A acquiring the detection result of the wiper blade position of the wiper motor unit 16.

At step 108, the wiper blade 22 determines whether or not the wiper blade 22 is in a position blocking the camera 12. In the determination, for example, the CPU 18A determines whether or not the position of the wiper blade 22 detected by the wiper motor unit 16 is in front of the camera 12 or is a position immediately prior to moving in front of the camera 12 (for example, whether or not wiper position signal of "1" of Fig. 4 has been detected). Processing transitions to step 110 in cases in which the determination is affirmative, or processing transitions to step 112 in cases in which the determination is negative.

At step 110, the CPU 18A controls the monitor 14 so that a rear-visual-recognition image immediately prior to the wiper blade 22 blocking in front of the camera 12 is held, and processing transitions to step 114. This enables images to be displayed without interruption since, even when the camera 12 is blocked by the wiper blade 22, the rear-visual-recognition image immediately prior to being blocked is displayed.

At step 112, the CPU 18A acquires the captured image of the camera 12 and controls so that the rear-visual-recognition image is displayed on the monitor 14, and processing transitions to step 114. Note that at this time, as illustrated in Fig. 5, a display to prompt an occupant not to forget to instruct stopping of wiper operation may be performed by displaying a wiper operation status such as "REAR WIPER ON" on the monitor 14.

At step 114, the CPU 18A determines whether or not the wiper switch (SW) 17 has been switched OFF, and processing returns to step 106 and the above processing is repeated in cases in which the determination is affirmative, or processing returns to step 100 and the above processing is repeated in cases in which the determination is negative.

The control device 18 thus performs control to display the captured images of the camera 12 on the monitor 14, such that rearward checking can always be performed since the rear-visual-recognition image is displayed on the monitor 14 without interruption, even if the wiper blade 22 blocks the in front of the camera 12.

Note that in the present exemplary embodiment, although the image of rearward of the vehicle captured by the camera 12 is displayed on the monitor 14, an image of inside of the vehicle cabin may be combined with the captured image of the camera 12 and displayed in a similar manner to an image optically reflected by the interior rearview mirror 20.

Further, in the present exemplary embodiment described above, the position of the camera 12 and the position of the wiper motor unit 16 are not limited to the above. For example, the wiper motor unit 16 and the camera 12 may be provided at positions below the rear window glass or may be provided to other positions.

Further, in the present exemplary embodiment, although an example is described in which the monitor 14 is provided to the interior rearview mirror 20, the monitor 14 may be provided in another position. For example, the monitor 14 may be provided to an instrument panel or the like, or may be provided inside a combination meter.

The processing performed by the control device 18 in the above exemplary embodiment has been explained as software processing; however, configuration is not limited thereto. For example, the processing may be performed by hardware, or the processing may be performed by a combination of both hardware and software.

The processing performed by the control device 18 in each of the above exemplary embodiments may be distributed as a program stored in a storage medium.

The present disclosure is not limited by the above description, and obviously, in addition to the above, various modifications may be implemented within a range not departing from the spirit of the present disclosure.

There is provided a vehicular visual recognition device including: an imaging section that images vehicle surroundings through a region that a wiper blade passes through; a display section that displays an imaging result of the imaging section; a detection section that detects a position of the wiper blade; and a controller that performs display control to display an image of vehicle surroundings captured by the imaging section and, at a timing at which the wiper blade passes through the imaging section, to hold an imaging result of prior to the wiper blade passing the imaging section for display on the display section.

## Claims

1. A vehicular visual recognition device (10) comprising:
an imaging section (12) that images vehicle surroundings through a region that a wiper blade (22) passes through;
a display section (14) that displays an imaging result of the imaging section;
a detection section (16) that detects a position of the wiper blade; and
a controller (18) that performs display control to display an image of vehicle surroundings captured by the imaging section and, at a timing at which the wiper blade passes through the imaging section, to hold an imaging result of prior to the wiper blade passing the imaging section for display on the display section.

2. The vehicular visual recognition device of claim 1, further comprising an instruction section (17) for instructing wiping operation of the wiper blade,
wherein the controller performs the display control in response to the wiping operation being instructed by the instruction section.

3. The vehicular visual recognition device of claim 1, wherein the controller (18) further controls the display section (14) so that information indicating that the wiping operation is ongoing is displayed while wiping operation is being performed by the wiper blade.

4. The vehicular visual recognition device of any one of claim 1 to claim 3, wherein:
the imaging section (12) images rearwards of a vehicle as vehicle surroundings; and
the display section (14) is disposed in a position of an interior rearview mirror (20) and includes a half mirror at a display face side of the display section.

5. The vehicular visual recognition device of claim 4, wherein
the detection section (16) comprises a wiper motor unit that is provided above a rear window glass and wipes the rear window glass by driving the wiper blade (22).

6. The vehicular visual recognition device of claim 1, wherein
the imaging section (12) is provided inside a vehicle cabin and is provided in a region that the wiper blade (22) passes through.
